# EUROPÄISCHE PATENTSCHRIFT

(11) **EP 0 968 806 B1**
(45) Veröffentlichungstag und Bekanntmachung des Hinweises auf die Patenterteilung: **11.09.2002**
(21) Anmeldenummer: 99890220.9
(22) Anmeldetag: 02.07.1999
(51) Int. Cl.: B29C 45/14, B29C 70/78

(54) **Verfahren zur herstellung mehrschichtiger bauteile**
Method for manufacturing multilayer articles
Procédé pour la fabrication des articles multicouches

(30) Priorität: 02.07.1998 AT 115698; 06.10.1998 AT 166898
(43) Veröffentlichungstag der Anmeldung: 05.01.2000
(73) Patentinhaber: Intier Automotive Eybl GmbH, 2435 Ebergassing (AT)
(72) Erfinder: Kiss, Johann, 2435 Ebergassing (AT); Hahnekamp, Richard Ing., 7000 Eisenstadt (AT); Kindermann, Andreas, 1030 Wien (AT)
(74) Vertreter: Vinazzer, Edith, Dipl.-Ing.

(56) Entgegenhaltungen:
- EP-A- 0 730 947
- DE-A- 19 531 598

## Beschreibung

Die vorliegende Erfindung betrifft ein Verfahren zur Herstellung mehrschichtiger Bauteile, insbesonders Verkleidungsteile für Kraftfahrzeuge, bei dem eine Dekorschicht, die mit einer Bindeschicht verbunden ist, in eine Form eingelegt wird, sodass die Dekorschicht an der Wand der Form anliegt, worauf Kunststoff in die Form eingebracht wird.

Alternativ dazu kann auch nur die Bindeschicht in die Form eingelegt werden, wobei die Dekorschicht nach Fertigstellung des aus dem Grundkörper und der Bindeschicht bestehenden Rohlings auf diesen aufgebracht wird. Ein solches Verfahren ist dann anzuwenden, wenn die Dekorschicht auf Grund ihrer Eigenschaften nicht in die Form eingelegt werden kann, beispielsweise bei Kunstleder od. dgl.

Es ist bekannt, Verkleidungsbauteile von Kraftfahrzeugen oder dgl. durch Hinterspritzen oder Hinterpressen herzustellen. Dabei wird eine Dekorschicht, wie z. B. eine aufgeraute Wirkware aus Polyester, die auf eine Bindeschicht aufkaschiert ist, in eine Spritzgussform eingelegt und hinterspritzt oder in einer entsprechenden Form hinterpresst. Dadurch entsteht ein mehrschichtiger Bauteil, dessen tragender Teil ein geformter Trägerwerkstoff, wie etwa der Spritzgussteil ist, und der an den sichtbaren Stellen mit der Dekorschicht verkleidet ist. Diese Direktverfahren ermöglichen es, dreidimensional gekrümmte Bauteile wesentlich einfacher und höherwertig herzustellen, als dies mit Verfahren möglich ist, bei denen die Dekorschicht auf einen fertigen Bauteil aufgebracht wird.

Allgemein sind solche Verfahren in der EP-A 730 947 der Anmelderin beschrieben.

Ein Verfahren gemäß dem Oberbegriff des Anspruches 1 ist aus der DE- A- 195 31 598 bekannt. Hier geht es um die Herstellung der beiden Halbschalen einer Sonnenblende durch ein Hinterpressverfahren. Um ein hinsichtlich des Qualitätseindruckes ungünstiges akustisches Verhalten bei klopfender Berührung zu vermeiden, kann die dem Kunststoff zugewandte Innenseite der Dekorschicht mit einer Vlies- oder Schaumschicht versehen werden.

Wesentlich bei solchen Direktverfahren ist, dass die Verfahrensparameter und die verwendeten Materialien so aufeinander abgestimmt werden, dass durch die beim Formungsvorgang auftretende Wärme und durch den Druck das Dekormaterial nicht geschädigt wird. Kritisch sind dabei stets die Bereiche der Angüsse oder von Verteilungskanälen, weil hier über einen relativ langen Zeitraum heißes Material entlang strömt. Die Bindeschicht hat dabei neben der Verbindung von Grundkörper und Dekorschicht die Aufgabe, eine Isolierung zu bilden, die die Dekorschicht schützt. Daher ist eine gewisse Mindestdicke vorgegeben, die die Bindeschicht aufweisen muss, um diese Aufgabe erfüllen zu können. Andererseits jedoch ist es im Hinblick auf die Form der Schnittkanten und auf die Anpassbarkeit an kleine Krümmungsradien erwünscht, die Bindeschicht so dünn wie möglich zu halten. Nicht zuletzt ist dies auch in Hinblick auf die Herstellungskosten wichtig. Diese gegensätzlichen Forderungen führen in der Praxis dazu, dass es immer wieder zu Problemen kommt, die Ausschuss verursachen oder zu aufwändigen Nacharbeiten Anlass geben. So müssen etwa Bereiche der Dekorschicht, die zu stark belastet worden sind, händisch bedampft und gebürstet werden, um wieder eine einheitliche Oberflächenstruktur herzustellen.

Aufgabe der vorliegenden Erfindung ist es, die oben beschriebenen Nachteile zu vermeiden und ein Verfahren anzugeben, das es ermöglicht, qualitativ höchstwertige Produkte mit geringem Ausschuss und mit günstigen Herstellungskosten zu fertigen.

Erfindungsgemäß ist vorgesehen, dass als Bindeschicht ein Vlies aus Mikrofasern, die eine Faserfeinheit zwischen 0,1 dtex und 1,0 dtex aufweisen, eingesetzt wird.

In überraschender Weise ermöglicht es die Verwendung von Mikrofaser-Strukturen, die Dicke der Bindeschicht zu verringern und dennoch die Gefahr der Schädigung der Dekorschicht zu verringern.

Aus der DE-C 43 36 788 ist es bekannt, für Schutzanzüge ein Nadelvlies aus Polypropylen-Mikrofasern zu verwenden. Dabei stehen die Wasserabsorptionseigenschaften solcher Stoffe im Vordergrund.

Weiters zeigt die US-A 5,706,804 eine Gesichtsmaske, die eine Schicht aus einem Material enthält, das aus Mikrofasern hergestellt ist. Ferner wird in der US-A 5,277,969 Kunstleder beschrieben, das zum Teil aus Mikrofasern aufgebaut ist.

Bei der vorliegenden Erfindung werden jedoch spezifische Eigenschaften von Mikrofasern verwendet, die Vorteile in einem unterschiedlichen Anwendungsgebiet ermöglichen. So ergibt offensichtlich die größere Glätte und die bessere Homogenität solcher Materialien den spezifischen Vorteil, auf dem die vorliegende Erfindung beruht.

Vorzugsweise wird die Dekorschicht vor dem Einlegen in die Form auf die Bindeschicht aufkaschiert. Dadurch ergibt sich eine gute Verbindung zwischen Dekorschicht und Bindeschicht. Dabei kommen beispielsweise folgende Verfahren in Frage:
- Das Kaltverfahren, wo Klebstoffe ohne weitere Temperaturzuführung gleichmäßig auf eines der beiden zu laminierenden Materialien aufgetragen und in Folge mit der zweiten Komponente zusammengefügt wird.
- Das Warmverfahren, wo Schmelzklebstoffe oder wärmeaktivierbare Reaktivklebstoffe auf das eine zu laminierende Material kalt oder aufgeschmolzen aufgetragen werden, bei Bedarf weiter erhitzt und umgehend mit der zweiten Komponente zusammengefügt werden.
- Das Flammkaschierverfahren, wo bevorzugt Schaumstoffe oberflächlich angeschmolzen (geflämmt) werden und unmittelbar mit den zu laminierenden Materialien zusammengefügt werden.

Weiters betrifft die vorliegende Erfindung einen Verkleidungsbauteil, insbesonders für Kraftfahrzeuge, bestehend aus einem Spritzguss-Formkörper, einer Bindeschicht und einer Dekorschicht. Erfindungsgemäß ist dieser Verkleidungsbauteil dadurch gekennzeichnet, dass die Bindeschicht ein Vlies aus Mikrofasern, die eine Faserfeinheit zwischen 0,1 dtex und 1,0 dtex aufweisen, ist.

In bevorzugtem Weise ist die Bindeschicht ein mechanisch verfestigtes Vlies. Ein solches Nadelvlies besitzt besonders günstige Eigenschaften in Hinblick auf die vorliegende Erfindung. Es ist jedoch alternativ dazu auch möglich, chemisch gebundene oder thermisch gebundene (kalandrierte) Vliese zu verwenden. Günstig sind auch wasserstrahlverfestigte Vliese, die eine Abart der mechanisch verfestigten Vliese darstellen.

Besonders günstige Eigenschaften werden erreicht, wenn das Flächengewicht der Bindeschicht zwischen 40 g/m² und 150 g/m² bei einer Dicke zwischen 0,5 mm und 2,0 mm beträgt und wenn die Faserfeinheit der Bindeschicht zwischen 0,5 dtex und 1,0 dtex beträgt.

Als Werkstoff für die Mikrofasern kommt primär Polyester in Betracht. Andere Werkstoffe, wie Polyamid, Polyacryl, Zellstoff und Viscose sind für spezielle Anwendungen ebenfalls einsetzbar.

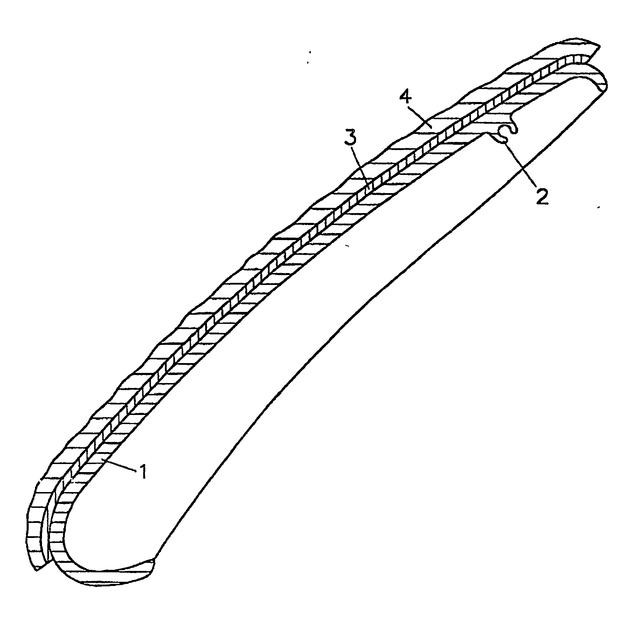

In der Figur ist schematisch ein erfindungsgemäßer Verkleidungsbauteil im Schnitt dargestellt. Der Verkleidungsbauteil besteht aus einem Spritzguss-Formkörper 1, an dem Befestigungselemente 2 angeformt sind. Ein Teil seiner Oberfläche, nämlich der in eingebautem Zustand sichtbare Teil, ist mit einer Bindeschicht 3 und darüber mit einer Dekorschicht 4 verkleidet.

Durch das erfindungsgemäße Verfahren kann ein mehrschichtiger Bauteil mit hervorragenden Eigenschaften hergestellt werden. Der Ausschuss kann auf Werte deutlich unter 1 % verringert werden und gleichzeitig können Nacharbeiten weitgehend vermieden werden. Der erfindungsgemäße Verkleidungsbauteil besitzt hervorragend Qualität.

Für besonders druck- und temperaturempfindliche Oberflächen eignet sich die vorliegende Erfindung in besonderer Weise für vliesgepresste oder vlies-gespritzte Formteile. Hier wird das aus Mikrofaser bestehende Vlies ohne weiteren Dekoraufbau zu einem Formteil mit "Vliesoberfläche" nach den vorhin beschriebenen Verfahren hergestellt. Im zweiten Schritt wird mit bekannten und üblichen Kaschiertechnologien das Formteil mit der jeweiligen Dekoroberfläche laminiert.

Als weiterer Vorteil sei genannt, dass schwer verklebbare Formteiloberflächen, wie z. B. Polypropylenformteile mit Mikrofaservliesoberflächen ohne besondere Oberflächenbehandlung und mit den bestehenden Technologien und Klebstoff- bzw. Schaumsystemen problemlos laminierbar werden.

## Patentansprüche

1. Verfahren zur Herstellung mehrschichtiger Bauteile, insbesondere Verkleidungsteile für Kraftfahrzeuge, bei dem eine Dekorschicht (4), die mit einer Bindeschicht (3) verbunden ist, in eine Form eingelegt wird, sodass die Dekorschicht an der Wand der Form anliegt, worauf Kunststoff (1) in die Form eingebracht wird, **dadurch gekennzeichnet, dass** als Bindeschicht (3) ein Vlies aus Mikrofasern, die eine Faserfeinheit zwischen 0,1 dtex und 1,0 dtex aufweisen, eingesetzt wird.

2. Verfahren nach Anspruch 1, **dadurch gekennzeichnet, dass** die Dekorschicht (4) vor dem Einlegen in die Form auf die Bindeschicht (3) aufkaschiert wird.

3. Verfahren zur Herstellung mehrschichtiger Bauteile, bei dem eine Bindeschicht (3) in eine Form eingelegt wird, sodass die Bindeschicht (3) an der Form anliegt, worauf Kunststoff (7) in die Form eingebracht wird, wobei nach der Formung auf die Bindeschicht eine Dekorschicht (4) aufgebracht wird, **dadurch gekennzeichnet, dass** als Bindeschicht (3) ein Vlies aus Mikrofasern, die eine Faserfeinheit zwischen 0,1 dtex und 1,0 dtex aufweisen, eingesetzt wird.

4. Verfahren nach einem der Ansprüche 1 bis 3, **dadurch gekennzeichnet, dass** der Kunststoff (7) in einem Spritzgießvorgang in die Form eingebracht wird.

5. Verkleidungsbauteil, insbesonders für Kraftfahrzeuge, bestehend aus einem Spritzguss-Formkörper (1), einer Bindeschicht (3) und einer Dekorschicht (4) **dadurch gekennzeichnet, dass** die Bindeschicht (3) ein Vlies aus Mikrofasern, die eine Faserfeinheit zwischen 0,1 dtex und 1,0 dtex aufweisen, ist.

6. Verkleidungsbauteil nach Anspruch 5, **dadurch gekennzeichnet, dass** die Bindeschicht (3) ein mechanisch verfestigtes Vlies ist.

7. Verkleidungsbauteil nach Anspruch 6, **dadurch gekennzeichnet, dass** das Flächengewicht der Bindeschicht (3) zwischen 40 g/m² und 150 g/m² bei einer Dicke zwischen 0,5 mm und 2,0 mm beträgt.

8. Verfahren nach einem der Ansprüche 1 bis 4 oder Verkleidungsbauteil nach Anspruch 5, **dadurch gekennzeichnet, dass** die Faserfeinheit der Mikrofasem zwischen 0,5 dtex und 1,0 dtex beträgt.

9. Verkleidungsbauteil nach einem der Ansprüche 5 bis 8, **dadurch gekennzeichnet, dass** die Mikrofasern aus Polyester bestehen.

10. Verkleidungsbauteil nach einem der Ansprüche 6 bis 9, **dadurch gekennzeichnet, dass** die Mikrofasern aus Polyamid bestehen.

## Claims

1. Method for producing multi-layer components, in particular lining parts for automotive vehicles, in which a decorative layer (4) is bonded to a bonding layer (3), is introduced into a mould, so that the decorative layer abuts against the wall of the mould, whereupon plastic material (7) is introduced into the mould, **characterised in that** a fibrous web formed from micro-fibres is used as bonding layer (3), which micro-fibres have a fibre fineness between 0.1 dtex and 1.0 dtex.

2. Method according to claim 1, **characterised in that** the decorative layer (4) is laminated onto the bonding layer (3) before introduction into the mould.

3. Method for producing multi-layer components, in which a bonding layer (3) is introduced into a mould, so that the bonding layer (3) abuts against the mould, whereupon plastic material (7) is introduced into the mould, a decorative layer (4) being applied to the bonding layer after moulding, **characterised in that** a fibrous web formed from micro-fibres is used as bonding layer (3), which micro-fibres have a fibre fineness between 0.1 dtex and 1.0 dtex.

4. Method according to one of the claims 1 to 3, **characterised in that** the plastic material (7) is introduced into the mould in an injection moulding process.

5. Lining component, in particular for automotive vehicles, comprising an injection moulded body (7), a bonding layer (3) and a decorative layer (4), **characterised in that** the bonding layer (3) is a fibrous web formed from micro-fibres which have a fibre fineness between 0.1 dtex and 1.0 dtex.

6. Lining component according to claim 5, **characterised in that** the bonding layer (3) is a mechanically compacted fibrous web.

7. Lining component according to claim 6, **characterised in that** the basis weight of the bonding layer (3) is between 40 g/m² and 150 g/m² in the case of a thickness between 0.5 mm and 2.0 mm.

8. Method according to one of the claims 1 to 4, or lining component according to claim 5, **characterised in that** the fibre fineness of the micro-fibres is between 0.5 dtex and 1.0 dtex.

9. Lining component according to one of the claims 5 to 8, **characterised in that** the micro-fibres are formed from polyester.

10. Lining component according to one of the claims 6 to 9, **characterised in that** the micro-fibres are formed from polyamide.

## Revendications

1. Procédé pour la fabrication de composantes en plusieurs couches, en particulier de pièces de garniture pour véhicules automobiles, dans lequel une couche décorative (4) qui est reliée à une couche de jonction (3) est posée dans un moule, de manière à ce que la couche décorative se trouve sur la paroi du moule, de la matière plastique (1) étant versée dessus dans le moule, **caractérisé en ce qu**'on utilise comme couche de jonction (3) un non tissé en microfibres qui présentent une finesse de fibres entre 0,1 dtex et 1,0 dtex.

2. Procédé selon la revendication 1, **caractérisé en ce que** la couche décorative (4) est posée sur la couche de jonction (3) avant d'être déposée dans le moule.

3. Procédé pour la fabrication de composantes en plusieurs couches, dans lequel une couche de jonction (3) est déposée dans un moule, de manière à ce que la couche de jonction (3) sur laquelle est versée la matière plastique (1) dans le moule soit en contact avec le moule, une couche décorative (4) étant appliquée après le moulage sur la couche de jonction, **caractérisé en ce qu**'on utilise comme couche de jonction (3) un non tissé en microfibres, qui présente une finesse de fibres entre 0,1 dtex et 1,0 dtex.

4. Procédé selon une des revendications 1 à 3, **caractérisé en ce que** la matière plastique (1) est versée dans le moule par opération de coulage par injection.

5. Composante de garniture, en particulier pour véhicules automobiles, consistant en un corps moulé par injection (1), une couche de jonction (3) et une couche décorative (4), **caractérisée en ce que** la couche de jonction (3) est un non tissé en microfibres qui présentent une finesse de fibres entre 0,1 dtex et 1,0 dtex.

6. Composante de garniture selon la revendication 5, **caractérisée en ce que** la couche de jonction (3) est un non tissé fixé par des moyens mécaniques.

7. Composante de garniture selon la revendication 6, **caractérisée en ce que** le poids de surface de la couche de jonction (3) se situe entre 40 g/m² et 150 g/m² avec une épaisseur située entre 0,5 mm et 2,0 mm.

8. Procédé selon une des revendications 1 ou 4 ou composante de garniture selon la revendication 5, **caractérisés en ce que** la finesse de fibres des microfibres se situe entre 0,5 dtex et 1,0 dtex.

9. Composante de garniture selon une des revendication 5 à 8, **caractérisée en ce que** les microfibres sont en polyester.

10. Composante de garniture selon une des revendication 6 à 9, **caractérisée en ce que** les microfibres sont en polyamide.
